# EUROPÄISCHE PATENTSCHRIFT

(11) **EP 1 889 009 B1**
(45) Veröffentlichungstag und Bekanntmachung des Hinweises auf die Patenterteilung: **23.06.2010**
(21) Anmeldenummer: 06724305.5
(22) Anmeldetag: 13.04.2006
(51) Int. Cl.: G01D 11/24

(54) **VORRICHTUNG ZUM BEFESTIGEN EINES SENSORS AN EINEM TRÄGERTEIL**
DEVICE FOR FASTENING A SENSOR TO A SUPPORT PART
DISPOSITIF POUR FIXER UN CAPTEUR SUR UNE PIECE PORTEUSE

(30) Priorität: 20.05.2005 DE 102005023221
(43) Veröffentlichungstag der Anmeldung: 20.02.2008
(73) Patentinhaber: A. RAYMOND ET CIE, 38000 Grenoble (FR)
(72) Erfinder: JÜRGENS, Christoph, 79597 Schallbach (DE); SPITZ, Uwe, 79618 Rheinfelden (DE); HÄNSEL, Mathias, 79595 Rümmingen (DE); CHOUVET, Laurent, 79395 Neuenburg (DE)
(74) Vertreter: Rüttgers, Joachim
(86) Internationale Anmeldenummer: PCT/EP2006/003407
(87) Internationale Veröffentlichungsnummer: WO 2006/122616

(56) Entgegenhaltungen:
- EP-A- 1 312 521
- EP-B- 1 005 692
- DE-A1- 10 347 098
- DE-B4- 10 060 447

## Beschreibung

Die Erfindung betrifft einen Sensorhalter gemäß dem Oberbegriff des Patentanspruches 1.

Ein derartiger Sensorhalter ist aus EP 1 005 692 B1 bekannt. Der vorbekannte Sensorhalter zum Befestigen eines Sensors an einem Trägerteil verfügt über eine Gegenplatte, die den Sensor umschließt. An die Gegenplatte ist eine Aufnahmehülse für den Sensor angeformt, die aus einem Metallblech hergestellt und mit Indexiermitteln ausgestattet ist, die mit an dem Sensor ausgebildeten Gegenmitteln zum winkelgerechten Einführen des Sensors in den Sensorhalter zusammenwirken. Die Gegenplatte ist mit Ausnehmungen ausgebildet, in die an einer Basisplatte als einem weiteren Teil des Sensorhalters ausgebildete Steckzungen einfügbar sind, um die Gegenplatte mit der an dem Trägerteil angegossene Basisplatte zu verbinden. Die Basisplatte ist ringförmig ausgebildet und weist eine gegenüber der Gegenplatte verhältnismäßig kleine Grundfläche auf.

DE 103 47 098 A1 offenbart eine Sensoranordnung für ein Kraftfahrzeug mit einer in einem Flächenelement angeordneten Aufnahmeanordnung für einen Sensor. Die Aufnahmeanordnung ist mit einem Halter ausgebildet, der mit einem nach außen abstehenden, kuppelartig ausgebildeten Fußteil ausgebildet, das einen Sensorkopf umschließt. An der auf der von dem Flächenelement abgewandten Seite des Fußteiles ist eine Klemmanordnung ausgebildet, die einen Sensorkopf des Sensors fixiert.

EP 1 312 521 A2 offenbart eine Vorrichtung zum Befestigen eines aus mehreren einzelnen Elementen aufgebauten Sensors an einem Trägerteil, die über ein topfartiges Bodenteil verfügt, das eine Anzahl von optischen Elementen des Sensors aufnimmt. Auf an dem Bodenteil ausgebildeten Stegen wird eine Leiterplatte gelegt, an die elektrische Elemente des Sensors angeschlossen sind. Mit einem mit dem Bodenteil verrastbaren Deckelteil wird die Leiterplatte fixiert.

DE 100 60 447 B4 offenbart eine federnde Haltezunge, die als separates Teil zum Befestigen eines Sensors diesen überspannt und mit ihren beiden Enden an dem Sensorhalter angebracht ist.

Aus DE 198 04 165 A1 ist eine Vorrichtung bekannt, bei der ein den Sensor umschließender ringförmiger Sensorhalter aus einem massiven Material, insbesondere aus einem Kunststoffmaterial, vorhanden ist. Der Sensorhalter ist mit Indexiermitteln ausgestattet, die bei der gattungsgemäßen Vorrichtung durch eine den Sensorhalter in radialer Richtung in seiner grundsätzlich ringförmigen Struktur unterbrechenden Aussparung ausgebildet sind. In die Aussparung ist als Gegenmittel ein schachtartiger Fortsatz eines Haltekäfigs des Sensors einfügbar, so dass der Sensor winkelgerecht in dem Sensorhalter angeordnet ist.

Der Erfindung liegt die Aufgabe zugrunde, einen alternativen Sensorhalter der eingangs genannten Art anzugeben, der sich bei einem geringen Gewicht durch eine verhältnismäßig große Befestigungsfläche auszeichnet und weiterhin das winkelgerechte Einführen des Sensors in den Sensorhalter sicherstellt.

Diese Aufgabe wird durch einen Sensorhalter der Eingangs genannten Art erfindungsgemäß mit den kennzeichnenden Merkmalen des Patentanspruches 1 gelöst.

Dadurch, dass der erfindungsgemäße Sensorhalter aus einem Metallblech hergestellt ist und über eine Basisplatte verfügt, deren Grundfläche größer als die Grundfläche der die Indexiermittel aufweisenden Gegenplatte ist, ergibt sich bei einem verhältnismäßig geringen Gewicht des Sensorhalters sowie bei einer weiterhin bereitgestellten Winkelindexierung insbesondere für eine Fließbandmontage eine effizient durchführbare Vorjustierung und eine verhältnismäßig große Befestigungsfläche zwischen dem erfindungsgemäßen Sensorhalter und einem Trägerteil, an dem er beispielsweise durch einen Schmelzklebevorgang befestigt wird.

Weitere zweckmäßige Ausgestaltungen des erfindungsgemäßen Sensorhalters sind Gegenstand der Unteransprüche.

Nachfolgend wird unter Bezug auf ein Ausführungsbeispiel der erfindungsgemäße Sensorhalter näher erläutert.

Es zeigen:
- Fig. 1: in einer perspektivischen Ansicht ein Ausführungsbeispiel eines erfindungsgemäßen Sensorhalters mit einem Regen sensor und einem Beschlagsensor,
- Fig. 2: in einer perspektivischen Ansicht das Ausführungsbeispiel gemäß Fig. 1 ohne die Sensoren und
- Fig. 3: in einer perspektivischen Ansicht das Ausführungsbeispiel gemäß Fig. 1 mit einer der Blickrichtung von Fig. 1 gege- nüberliegenden Blickrichtung.

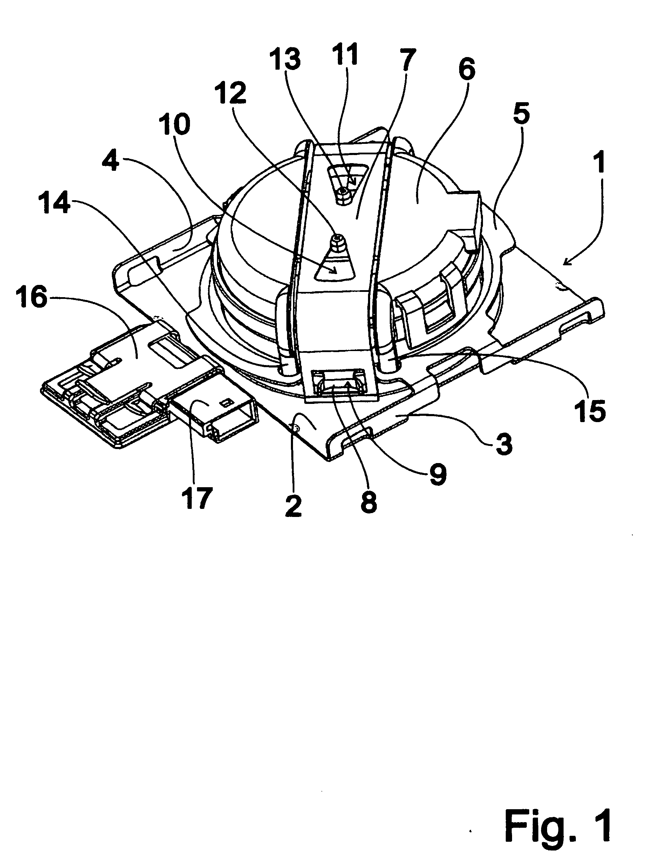

Fig. 1 zeigt in einer perspektivischen Ansicht ein Ausführungsbeispiel eines erfindungsgemäßen Sensorhalters 1, der bei dem dargestellten Ausführungsbeispiel aus einem gestanzten und anschließend einer Abfolge von Biegeumformungen unterworfenen Stahlblech hergestellt ist. Der Sensorhalter 1 verfügt über eine in ihren äußeren Abmessungen rechteckige, vorzugsweise im Wesentlichen quadratische Basisplatte 2, an der eine erste Seitenwand 3 und eine zweite Seitenwand 4 angeformt sind, die im Wesentlichen rechtwinklig zu der Basisplatte 2 in jeweils gleicher Richtung weisend abstehen. Weiterhin ist der Sensorhalter 1 mit einer Gegenplatte ausgestattet, die bei dem dargestellten Ausführungsbeispiel als ein Aufnahmering 5 ausgebildet ist, der in einem Abstand von der Basisplatte 2 angeordnet und mit dieser über eine einstückige Anbindung mit der ersten Seitenwand 3 sowie über eine weiter unten näher erläuterte lösbare Verbindung mit der zweiten Seitenwand 4 verbunden ist.

In der Darstellung gemäß Fig. 1 umschließt der Sensorhalter 1 einen rundlich ausgebildeten Regensensor 6, der über einen U-förmigen Haltebügel 7 an dem Sensorhalter 1 gehalten ist. Bei dem Ausführungsbeispiel gemäß Fig. 1 ist im Bereich beider Enden des Haltebügels 7 jeweils eine Verriegelungsstruktur vorhanden, die durch jeweils eine an dem Aufnahmering 5 angeformte Rastzunge 8 sowie eine im jeweiligen Endbereich des Haltebügels 7 eingebrachte Rastausnehmung 9 ausgebildet ist. Weiterhin verfügt der Haltebügel 7 in seinem zwischen den Schenkeln liegenden Abschnitt über Fixierausnehmungen 10, 11, durch die auf der in der Darstellung gemäß Fig. 1 im Sichtbereich liegenden Oberseite des Regensensors 6 ausgebildete Fixierstifte 12, 13 durchgreifen und an den aufeinander zu weisenden Enden der Fixierausnehmungen 10, 11 anschlagen.

Weiterhin ist Fig. 1 zu entnehmen, dass der Regensensor 6 eine Anzahl von Ausrichtstiften aufweist, wobei die in der Darstellung gemäß Fig. 1 sichtbaren Ausrichtstifte 14, 15 beidseitig des Haltebügels 7 angeordnet sind und sich in Richtung des Aufnahmeringes 5 erstrecken.

Weiterhin lässt sich Fig. 1 entnehmen, dass bei dem dargestellten Ausführungsbeispiel an der Basisplatte 2 eine entsprechend der Materialwahl mit einer bestimmten Vorspannkraft federnde Haltezunge 16 angesetzt ist, mit der als ein weiterer Sensor ein Beschlagsensor 17 lösbar fixierbar ist. Die Haltezunge 16 ist einstückig mit der Basisplatte 2 verbunden und dazu eingerichtet, den Beschlagsensor 17 mit einer vorbestimmten Andruckkraft gegen ein in Fig. 1 nicht dargestelltes Trägerteil zu drücken.

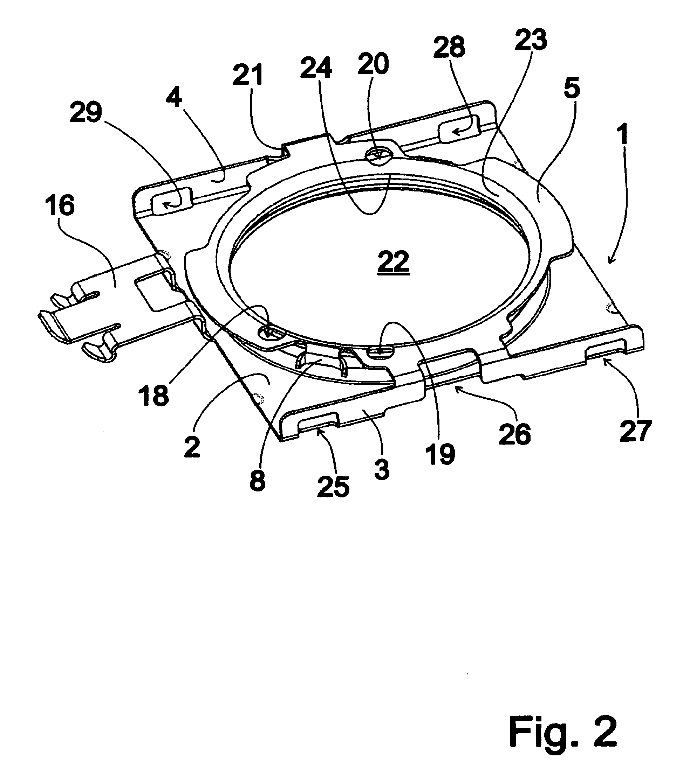

Fig. 2 zeigt in einer perspektivischen Ansicht das Ausführungsbeispiel gemäß Fig. 1 ohne den Regensensor 6, den Haltebügel 7 und den Beschlagsensor 17. Aus Fig. 2 ist ersichtlich, dass in den Aufnahmering 5 an den Positionen der in der Darstellung gemäß Fig. 1 sichtbaren Ausrichtstifte 14, 15 und eines weiteren, in der Darstellung gemäß Fig. 1 nicht sichtbaren Ausrichtstiftes des Regensensors 6 Ausrichtausnehmungen 18, 19, 20 eingebracht sind, in die bei bestimmungsgemäßer Anordnung des Regensensors 6 die zugehörigen Ausrichtstifte eingreifen. Die Ausrichtausnehmungen 18, 19, 20 sind so angeordnet, dass die Winkelabstände zwischen wenigstens zwei Ausrichtausnehmungen 18, 19, 20 unterschiedlich sind, so dass die Ausrichtausnehmungen 18, 19, 20 Indexiermittel bilden, um ein winkelgerechtes Einführen des Regensensors 6 in den Sensorhalter 1 zu gewährleisten. Dadurch ist auch eine Kodierung für unterschiedliche Typen von Sensoren, insbesondere Regensensoren 6, geschaffen.

Weiterhin lässt sich in Fig. 2 erkennen, dass an dem Aufnahmering 5 an der im Verbindungsbereich mit der ersten Seitenwand 3 gegenüberliegenden Seite eine Verschlusszunge 21 angeformt ist, die im Wesentlichen rechtwinklig zu der Ebene des Aufnahmeringes 5 ausgerichtet ist und sich in der Anordnung gemäß Fig. 2 in Richtung der Basisplatte 2 erstreckt sowie die zweite Seitenwand 4 auf der der Basisplatte 2 gegenüberliegenden Seite hintergreift.

Aus Fig. 2 ist auch gut erkennbar, dass auf der einem den Regensensor 6 aufnehmenden Sensorkanal 22 zugewandten Innenseite des Aufnahmeringes 5 eine in Richtung der Basisplatte 2 weisende Fase 23 ausgebildet ist, um den Aufnahmering 5 bezüglich Biegebelastungen zu versteifen. An die Fase 23 ist ein sich in Richtung der Basisplatte 2 erstreckender zylinderförmiger Kragen 24 angesetzt, der die exakte Positionierung des Regensensors 6 bewirkt.

Aus Fig. 2 lässt sich weiterhin erkennen, dass im Übergangsbereich von der Basisplatte 2 in die Seitenwände 3, 4 Randausnehmungen 25, 26, 27, 28, 29 eingebracht sind, in die in Fig. 2 nicht dargestellte Greifmittel zum Anordnen des Sensorhalters 1 an einem in Fig. 2 nicht dargestellten Trägerteil sowie nach der Befestigung an dem Trägerteil Rastelemente eines in Fig. 2 ebenfalls nicht dargestellten Abdeckteiles eingreifen können.

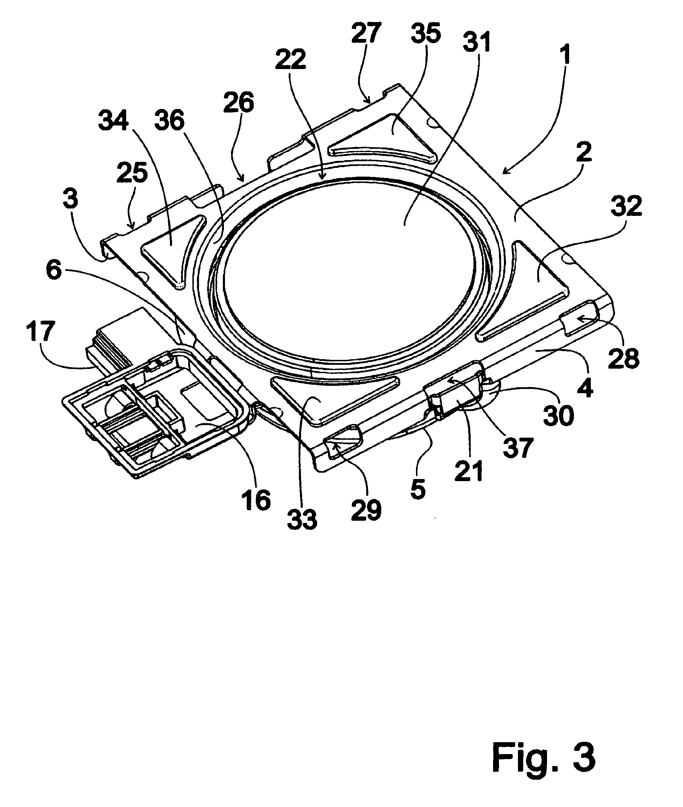

Fig. 3 zeigt in einer perspektivischen Ansicht das Auführungsbeispiel gemäß Fig. 1 und Fig. 2 auf eine der Blickrichtung in Fig. 1 abgewandten Seite auf den Sensorhalter 1 mit eingefügtem Regensensor 6. Zunächst sei im Zusammenhang mit dem Regensensor 6 angemerkt, dass in der Darstellung gemäß Fig. 3 der Ausrichtstift 30 sichtbar ist, der in die im Bereich der Verschlusszunge 21 angeordnete Ausrichtausnehmung 20 eingreift. Weiterhin ist Fig. 3 zu entnehmen, dass auf den Regensensor 6 eine Silikonschicht 31 aufgebracht ist.

Benachbart des Sensorkanales 22 sind auf der im Aufnahmering 5 gegenüberliegenden Seite der Basisplatte 2 eine Anzahl von Schmelzkleberkissen 32, 33, 34, 35 aufgebracht, die zum Befestigen des Sensorhalters 1 an einem in Fig. 3 nicht dargestellten Trägerteil, insbesondere im Innenbereich einer Scheibe eines Kraftfahrzeugs, dienen. Bezüglich des Sensorhalters 1 lässt sich Fig. 3 entnehmen, dass die Basisplatte 2 auf ihrer in der Darstellung gemäß Fig. 3 den Sensorkanal 22 im Wesentlichen ausfüllenden Regensensor 6 zugewandten Innenseite zum Ausbilden einer definierten Fließgrenze für den Schmelzkleber sowie zum Erhöhen der Biegesteifigkeit ebenfalls eine Fase 36 aufweist.

Weiterhin lässt sich der Darstellung gemäß Fig. 3 entnehmen, dass die Verschlusszunge 21 mit quer ausgerichteten überstehenden Endstücken in eine im Übergangsbereich zwischen der Basisplatte 2 und der zweiten Seitenwand 4 eingebrachte Verschlussausnehmung 37 der auch die Verschlusszunge 21 aufweisenden Verschlussstruktur eingreift, um den Aufnahmering 5 auch auf dieser Seite mit der Basisplatte 2, hier jedoch lösbar, zu verbinden.

## Patentansprüche

1. Sensorhalter zum Umschließen und Befestigen eines Sensors (6) an einem Trägerteil, wobei bei dem Sensorhalter (1) eine Gegenplatte (5) vorhanden ist und wobei der Sensorhalter (1) mit Indexiermitteln (18, 19, 20) ausgestattet ist, die dazu eingerichtet sind, mit an einem Sensor (6) ausgebildeten Gegenmitteln (14, 15, 30) zum winkelgerechten Einführen eines Sensors (6) in den Sensorhalter (1) zusammenzuwirken, **dadurch gekennzeichnet, dass** der Sensorhalter (1) aus einem Metallblech hergestellt ist, dass eine Basisplatte (2) vorhanden ist, an der eine Seitenwand (3) angeformt ist, dass die Gegenplatte (5) über eine einstückige Anbindung mit der Seitenwand (3) verbunden ist, so dass die Basisplatte (2) und die Gegenplatte (5) in einem Abstand voneinander angeordnet sind, dass die Grundfläche der Basisplatte (2) größer als die Grundfläche der Gegenplatte (5) ist, dass die Indexiermittel (18, 19, 20) an der Gegenplatte (5) ausgebildet sind, dass zwischen der Basisplatte (2) sowie der Gegenplatte (5) eine weitere Seitenwand (3, 4) ausgebildet ist und dass an der weiteren Seitenwand (4) sowie an der Gegenplatte (5) miteinander in Eingriff bringbare Verschlussstrukturen (21, 37) zum Ausbilden einer lösbaren Verbindung zwischen der Gegenplatte (5) und der weiteren Seitenwand (4) ausgebildet sind.

2. Sensorhalter nach Anspruch 1, **dadurch gekennzeichnet, dass** ein Haltebügel (7) vorhanden ist, der dazu eingerichtet ist, einen in den Sensorhalter (1) eingefügten Sensor (6) zu übergreifen, und dass an der Gegenplatte (5) sowie an wenigstens einem Ende des Haltebügels (7) eine Verriegelungsstruktur (8, 9) zum Verbinden des Haltebügels (7) mit der Gegenplatte (5) ausgebildet ist.

3. Sensorhalter nach Anspruch 1 oder Anspruch 2, **dadurch gekennzeichnet, dass** die Gegenplatte (5) an ihrem einem in den Sensorhalter (1) eingefügten Sensor (6) zugewandten Innenrand eine Fase (23) und einen sich an die Fase (23) anschließenden zylinderförmigen Kragen (24) aufweist.

4. Sensorhalter nach einem der Ansprüche 1 bis 3, **dadurch gekennzeichnet, dass** die Indexiermittel Ausrichtausnehmungen (18, 19, 20) sind, die so angeordnet sind, dass die Winkelabstände zwischen wenigstens zwei Ausrichtausnehmungen (18, 19, 20) unterschiedlich sind.

5. Sensorhalter nach einem der Ansprüche 1 bis 4, **dadurch gekennzeichnet, dass** die Gegenplatte ringförmig als Aufnahmering (5) ausgebildet ist.

6. Sensorhalter nach einem der Ansprüche 1 bis 5, **dadurch gekennzeichnet, dass** in den Seitenwänden (3, 4) Randausnehmungen (25, 26, 27, 28) eingebracht sind.

7. Sensorhalter nach einem der Ansprüche 1 bis 6, **dadurch gekennzeichnet, dass** zur Aufnahme eines weiteren Sensors (17) eine federnde Haltezunge (16) vorhanden ist, die einstückig mit der Basisplatte (2) verbunden ist.

## Claims

1. Sensor holder for encompassing and fastening a sensor (6) to a support part, a counter plate (5) being present in the sensor holder (1) and the sensor holder (1) being equipped with indexing means (18, 19, 20) which are set up for cooperating with counter means (14, 15, 30) formed on a sensor (6) and intended for insertion of a sensor (6) into the sensor holder (1) at the correct angle, **characterized in that** the sensor holder (1) is produced from a metal sheet, **in that** a base plate (2) on which a side wall (3) is formed is present, **in that** the counter plate (5) is connected to the side wall (3) via an integral connection so that the base plate (2) and the counter plate (5) are arranged a distance apart, **in that** the base area of the base plate (2) is greater than the base area of the counter plate (2) **in that** the indexing means (18, 19, 20) are formed on the counter plate (5), **in that** a further side wall (3, 4) is formed between the base plate (2) and the counter plate (5) and **in that** lock structures (21, 37) which can be caused to engage one another and are intended for producing a detachable connection between the counter plate (5) and the further side wall (4) are formed on the further side wall (4) and on the counter plate (5).

2. Sensor holder according to Claim 1, **characterized in that** a retaining bracket (7) is present, which is set up for encompassing a sensor (6) inserted into the sensor holder (1), and **in that** a lock structure (8, 9) for connecting the retaining bracket (7) to the counter plate (5) is formed on the counter plate (5) and on at least one end of the retaining bracket (7).

3. Sensor holder according to Claim 1 or Claim 2, **characterized in that** the counter plate (5) has a chamfer (23) on its inner edge facing a sensor (6) inserted into the sensor holder (1) and a cylindrical collar (24) adjacent to the chamfer (23).

4. Sensor holder according to any of Claims 1 to 3, **characterized in that** the indexing means are orientation openings (18, 19, 20) which are arranged in such a way that the angular spacings between at least two orientation openings (18, 19, 20) are different.

5. Sensor holder according to any of Claims 1 to 4, **characterized in that** the counter plate is annular and is formed as a holding ring (5).

6. Sensor holder according to any of Claims 1 to 5, **characterized in that** edge openings (25, 26, 27, 28) are made in the side walls (3, 4).

7. Sensor holder according to any of Claims 1 to 6, **characterized in that**, for holding a further sensor (17), a springy retaining tongue (16) which is integrally connected to the base plate (2) is present.

## Revendications

1. Porte-détecteur destiné à enserrer et à fixer un détecteur (6) sur un élément faisant office de support, ledit porte-détecteur (1) comprenant en l'occurrence une contreplaque (5) et ledit porte-détecteur (1) étant en l'occurrence muni de moyens d'indexation (18, 19, 20) qui sont agencés pour opérer en combinaison avec des moyens d'accouplement conjugués (14, 15, 30) que comporte un détecteur (6) pour permettre d'insérer parfaitement d'équerre ce détecteur (6) dans le porte-détecteur (1), **caractérisé en ce que** le porte-détecteur (1) est réalisé à partir d'un flan en tôle métallique, **en ce qu'**il est prévu une plaque de base (2) de laquelle une paroi latérale (3) est réalisée solidaire par formage, **en ce que** la contreplaque (5) est reliée à la paroi latérale (3) par une attache de raccordement monobloc, de telle sorte que la plaque de base (2) et la contreplaque (5) sont disposées avec un certain écartement l'une par rapport à l'autre, **en ce que** la surface du fond de la plaque de base (2) est plus grande que la surface du fond de la contreplaque (5), **en ce que** les moyens d'indexation (18, 19, 20) sont ménagés sur la contreplaque (5), **en ce qu'**il existe entre la plaque de base (2) et la contreplaque (5) une autre paroi latérale (3, 4) et **en ce qu'**il est prévu, au niveau de l'autre paroi latérale (4) ainsi qu'au niveau de la contreplaque (5), des structures de verrouillage (21, 37) destinées à être engagées en prise d'encastrement réciproque pour réaliser une liaison de raccordement dissociable entre la contreplaque (5) et l'autre paroi latérale (4).

2. Porte-détecteur selon la revendication 1, **caractérisé en ce qu'**il est prévu un étrier de retenue (7) qui est agencé de manière à venir cramponner par le dessus un détecteur (6) disposé dans le porte-détecteur (1) et **en ce qu'**une structure de verrouillage (6, 9) destinée à raccorder l'étrier de retenue (7) à la contreplaque (5) est ménagée au niveau d'une extrémité au moins de l'étrier de retenue (7).

3. Porte-détecteur selon la revendication 1 ou la revendication 2, **caractérisé en ce que** la contreplaque (5) comporte, au niveau de son bord intérieur orienté vers un détecteur (6) inséré en position dans le porte-détecteur (1), un chanfrein (23) et une collerette de forme cylindrique (24) immédiatement attenante au chanfrein (23).

4. Porte-détecteur selon l'une des revendications 1 à 3, **caractérisé en ce que** les moyens d'indexation sont constitués par des évidements de positionnement (18, 19, 20) qui sont disposés de telle façon que les intervalles d'écartement angulaires entre au moins deux évidements de positionnement (18, 19, 20) sont différents.

5. Porte-détecteur selon l'une des revendications 1 à 4, **caractérisé en ce que** la contreplaque est réalisée selon une configuration circulaire pour faire office de logement de réception annulaire.

6. Porte-détecteur selon l'une des revendications 1 à 5, **caractérisé en ce que** des échancrures (25, 26, 27, 28) sont ménagées dans les rives des parois latérales (3, 4).

7. Porte-détecteur selon l'une des revendications 1 à 6, **caractérisé en ce qu'**il est prévu une languette de retenue élastique (16) pour le montage d'un autre détecteur (17), qui est rendue solidaire de la plaque de base (2) par réalisation monobloc.
